(19) Europäisches Patentamt
European Patent Office
Office européen des brevets

(11) EP 3 290 456 A1

(12) **EUROPEAN PATENT APPLICATION**

(43) Date of publication:
**07.03.2018 Bulletin 2018/10**

(51) Int Cl.:
***C08G 59/40*** *(2006.01)* ***C08G 59/50*** *(2006.01)*

(21) Application number: **17187232.8**

(22) Date of filing: **22.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.09.2016 JP 2016171495**

(71) Applicant: **Shin-Etsu Chemical Co., Ltd.**
**Chiyoda-ku,**
**Tokyo 100-0004 (JP)**

(72) Inventors:
- **KUSHIHARA, Naoyuki**
  **Annaka-shi, Gunma 379-0224 (JP)**
- **SUMITA, Kazuaki**
  **Annaka-shi, Gunma 379-0224 (JP)**

(74) Representative: **Zacco GmbH**
**Bayerstrasse 83**
**80335 München (DE)**

(54) **HEAT-CURABLE EPOXY RESIN COMPOSITION**

(57) Provided is a heat-curable epoxy resin composition capable of yielding a cured product exhibiting a high heat resistance, a low water absorbability and a high strength. The composition of the invention is a heat-curable resin composition containing a liquid epoxy resin (A), an aromatic amine-based curing agent (B) and a cyclic carbodiimide compound (C). The aromatic amine-based curing agent (B) is added in an amount at which a total of all the amino groups in the aromatic amine-based curing agent (B) will be in an amount of 0.7 to 1.5 equivalents per one equivalent of all the epoxy groups in the liquid epoxy resin (A). The cyclic carbodiimide compound (C) is in an amount of 2 to 50 parts by mass per a total of 100 parts by mass of the liquid epoxy resin (A) and the aromatic amine-based curing agent (B).

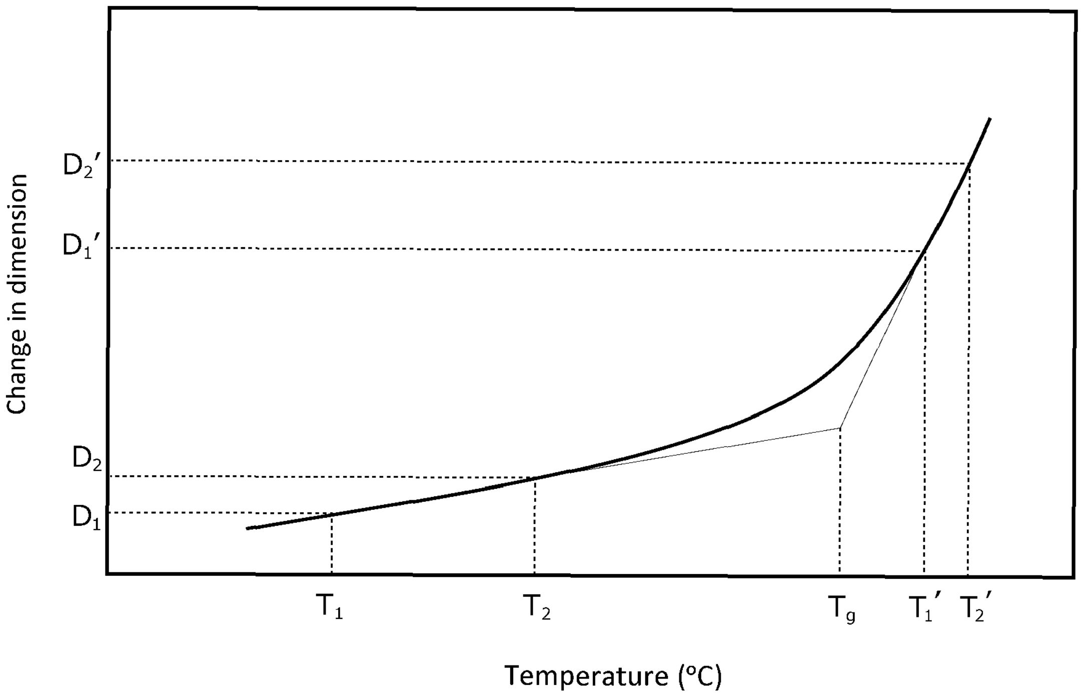


EP 3 290 456 A1

## Description

[Technical field]

The present invention relates to a heat-curable epoxy resin composition.

[Background art]

In recent years, electronic devices have been downsized in an accelerated manner in the field of semiconductor-related materials. These electronic devices include mobile phones, smartphones, ultrathin liquid crystal or plasma TVs, lightweight laptop computers and the like. Electronic parts used in these devices are now, for example, integrated and packaged in a highly dense manner. Therefore, it has been required that a resin material used in these electronic parts have a low-expansion property in terms of stress. Further, it has also been required that such resin material have a heat resistance due to the fact that the highly integrated electronic parts tend to generate more heat.

Cyanate ester resin has been known as a heat-curable resin that is superior in heat resistance; and exhibits a low viscosity, a low electric permittivity and a low dielectric loss. However, although cured products employing cyanate ester resin is superior in terms of low thermal expansion, some of them exhibit a high water absorption rate and an insufficient heat resistance in a moisture-absorbed state (Patent document 1).

Further, as a resin composition capable of yielding a cured product superior in mechanical strength, strength of adhesion to an adherend, film formability, heat resistance and pressure resistance, there has been disclosed a resin composition (Patent document 2) containing a polyamideimide resin (VYLOMAX HR16NN by Toyobo Co., Ltd.), diphenylethane bismaleimide (BMI-70 by K·I Chemical Industry Co., LTD.) and an allylphenol resin (MEH-8000H by Showa Kasei Kogyo Co., Ltd.). Problems with this resin composition are as follows. That is, since this resin composition employs a thermalplastic high-molecular-weight polyamideimide resin, the composition exhibits a poor meltability under a lower temperature, or a poor compatibility with a maleimide compound. Thus, phase separation may occur at the time of curing a coated film, which makes it difficult to obtain a homogenous coated film. Further, since this resin composition employs a high-boiling solvent such as NMP, a residual solvent will be observed in stage B.

In addition, there has also been disclosed a method in which a cyclic carbodiimide compound is added to a polylactate so as to block the terminals thereof, thereby restricting the occurrence of free isocyanate, and thus improving hydrolysis resistance (Patent document 3).

[Prior art document]

[Patent document]

[Patent document 1] JP-A-2014-080455
[Patent document 2] JP-A-2004-168894
[Patent document 3] JP-A-2010-285557

[Summary of the invention]

[Problem to be solved by the invention]

Therefore, it is an object of the present invention to provide a heat-curable epoxy resin composition capable of yielding a cured product having a superior heat resistance, a low water absorbability and a high strength.

[Means to solve the problem]

In view of the abovementioned facts, the inventors of the invention diligently conducted a series of studies, and completed the invention as follows. That is, the inventors found that a composition containing a liquid epoxy resin, an aromatic amine-based resin and a cyclic carbodiimide at given ratios could help achieve the above objectives, since this composition exhibited a high glass-transition temperature, a superior heat resistance and a superior resin strength.

Particularly, the invention is to provide the following resin composition.

[1] A heat-curable epoxy resin composition comprising:

(A) a liquid epoxy resin;
(B) an aromatic amine-based curing agent; and
(C) a cyclic carbodiimide compound, wherein

the aromatic amine-based curing agent (B) is in an amount at which a total of all amino groups in the aromatic amine-based curing agent (B) is in an amount of 0.7 to 1.5 equivalents per one equivalent of all epoxy groups in the liquid epoxy resin (A), and the cyclic carbodiimide compound (C) is in an amount of 2 to 50 parts by mass per a total of 100 parts by mass of the liquid epoxy resin (A) and the aromatic amine-based curing agent (B).
[2] The heat-curable epoxy resin composition according to [1], wherein the component (B) comprises at least one of the aromatic amine-based curing agents represented by the following formulae (1), (2), (3) and (4)

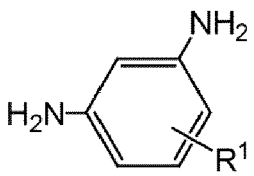
(1)

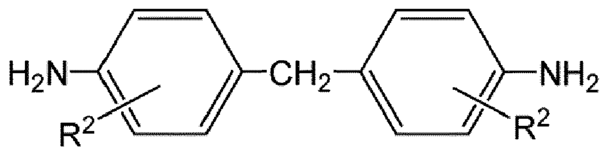
(2)

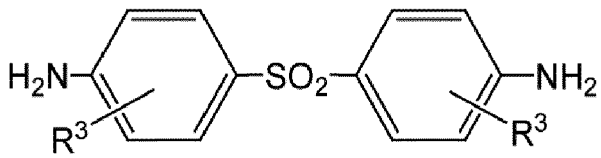
(3)

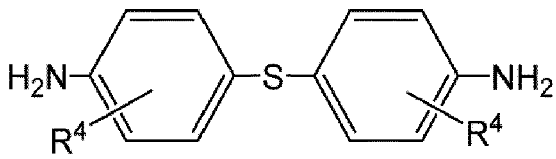
(4)

wherein each of $R^1$ to $R^4$ represents a hydrogen atom; an identical or different monovalent hydrocarbon group having 1 to 6 carbon atoms; $CH_3S$-; or $CH_3CH_2S$-.
[3] The heat-curable epoxy resin composition according to [1] or [2], further comprising an inorganic filler (D).

[Effects of the invention]

The heat-curable epoxy resin composition of the invention is capable of yielding a cured product having a high heat resistance, a low water absorbability and a high strength.

[Brief description of the drawings]

FIG.1 is a diagram showing a method for determining a glass-transition temperature.

[Mode for carrying out the invention]

The present invention is described in detail hereunder.
A liquid epoxy resin (A) is an epoxy resin that is liquid at room temperature (25°C). Examples of the liquid epoxy resin (A) include a liquid bisphenol A-type epoxy resin, a liquid bisphenol F-type epoxy resin, a liquid naphthalene-type epoxy resin, a liquid aminophenol-type epoxy resin, a liquid hydrogenated bisphenol-type epoxy resin, a liquid alcoholether-type epoxy resin, a liquid fluorene-type epoxy resin and a liquid alicyclic epoxy resin. Any one of these epoxy resins may be used singularly, or two or more of them may be used in combination.
It is preferred that the composition of the invention contain the component (A) by an amount of 30 to 80% by

mass, more preferably 40 to 75% by mass, or even more preferably 45 to 70% by mass.

An aromatic amine-based curing agent as a component (B) serves as a curing agent for the component (A), and is an aromatic ring-containing amine-based compound superior in heat resistance and storage stability. Preferable examples of the component (B) include the aromatic amine-based curing agents represented by the following formulae (1) to (4).

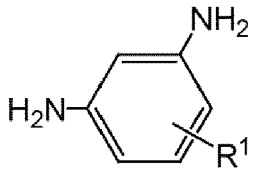
(1)

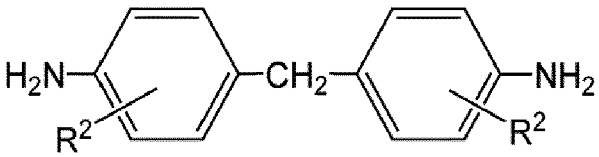
(2)

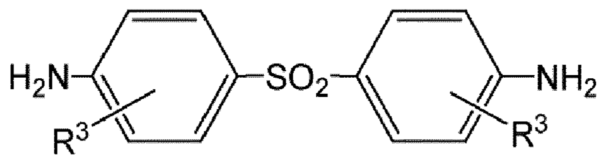
(3)

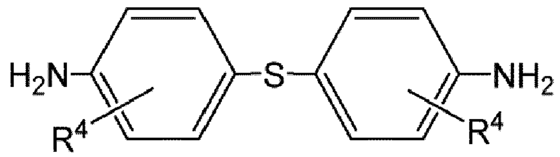
(4)

In the formulae (1) to (4), each of $R^1$ to $R^4$ represents a hydrogen atom; an identical or different monovalent hydrocarbon group having 1 to 6 carbon atoms; $CH_3S$- ; or $CH_3CH_2S$-.

Among the aromatic amine-based curing agents represented by the formulae (1), (2), (3) and (4), preferable examples thereof include aromatic diaminodiphenylmethane compounds such as 3,3'-diethyl-4,4'-diaminodiphenylmethane, 3,3',5,5'-tetramethyl-4,4'-diaminodiphenylmethane and 3,3',5,5'-tetraethyl-4,4'-diaminodiphenylmethane; 2,4-diaminotoluene; 1,4-diaminobenzene; and 1,3-diaminobenzene. Any one of these curing agents may be used singularly, or two or more of them may be used in combination.

Among the aforementioned aromatic amine-based curing agents, those that are liquid at room temperature (20 to 30°C) may be added directly, whereas those that are solid at room temperature cannot be added directly. This is because if these curing agents that are solid at room temperature are added directly, the resin viscosity will rise such that a workability will be significantly impaired. Thus, it is preferred that such curing agents that are solid at room temperature be melted and mixed with the abovementioned liquid epoxy resin(s) in advance, and it is desired that they are melted and mixed with such liquid epoxy resin(s) at a later-described specific compounding ratio under a temperature of 70 to 150°C for one to two hours. When such mixing temperature is lower than 70°C, the aromatic amine-based curing agent(s) may not be fully compatible with the liquid epoxy resin(s). When such mixing temperature is higher than 150°C, the aromatic amine-based curing agent(s) will react with the liquid epoxy resin(s) such that an increase in viscosity may be observed. Further, if the time period spent in mixing is less than an hour, the aromatic amine-based curing agent(s) will not be fully compatible with the liquid epoxy resin(s) such that an increase in viscosity may be observed. When the time period spent in mixing is more than two hours, the aromatic amine-based curing agent(s) will react with the liquid epoxy resin(s) such that an increase in viscosity may be observed as well.

The aromatic amine-based curing agent(s) are added in an amount at which a total of all the amino groups in the aromatic amine-based curing agent(s) will be in an amount of 0.7 to 1.5 equivalents, preferably 0.7 to 1.2 equivalents, more preferably 0.7 to 1.1 equivalents, and particularly preferably 0.85 to 1.05 equivalents, per one equivalent of all the epoxy groups in the component (A). When such equivalent is smaller than 0.7, unreacted epoxy groups may remain, the glass-transition temperature may decrease, or a decrease in adhesiveness may be observed. When such equivalent is larger than 1.5, a cured product will become hard and brittle in a way such that cracks may occur at the time of performing reflow or when subjected to a temperature cycle.

(C) Cyclic carbodiimide compound

In the present invention, a cyclic carbodiimide compound (C) has at least one cyclic structure in one molecule, and one carbodiimide group in one cyclic structure. By adding such cyclic carbodiimide compound, there can be achieved functions and effects of, for example, improving the heat resistance of the cured product obtained, reducing the level of cure shrinkage, improving the adhesiveness to a base material, and improving the toughness of the cured product. The cyclic structure has one carbodiimide group (-N=C=N-), and the first and second nitrogen atoms thereof are bonded to each other through a linking group. It is preferred that the number of the atoms in the cyclic structure be 8 to 50, more preferably 10 to 30, or even more preferably 10 to 20.

Here, the number of the atoms in the cyclic structure refers to the number of the atoms directly composing the cyclic structure. For example, the number of the atoms is 8, when the cyclic structure is an 8-membered ring; and the number of the atoms is 50, when the cyclic structure is a 50-membered ring. It is preferred that the number of the atoms in the cyclic structure be 8 to 50. When the number of the atoms in the cyclic structure is smaller than 8, the stability of the cyclic carbodiimide compound will be impaired such that it may be difficult to store and use the same. Further, although there are no particular restrictions on the upper limit of the number of ring members in terms of reactivity, it is difficult and costly to synthesize a cyclic carbodiimide compound having more than 50 atoms. Therefore, it is preferred that the number of the atoms in the cyclic structure be 10 to 30, more preferably 10 to 20.

As the cyclic carbodiimide compound (C), there can be listed a compound having a structure represented by the following formula (5).

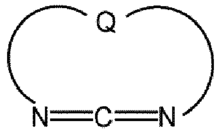

(5)

In the formula (5), Q represents a divalent to quadrivalent linking group that may contain a hetero atom(s) and/or a substituent group(s). Specifically, Q represents an aliphatic hydrocarbon group, an alicyclic hydrocarbon group, an aromatic hydrocarbon group or a combination of two or more of these groups. Such hetero atom(s) may be O, N, S and P. Two of the valences of this linking group are used to form a cyclic structure. When Q is a trivalent or quadrivalent linking group, Q is bonded to a polymer or an other cyclic structure through a single bond, a double bond, an atom or a group of atoms.

It is preferred that the linking group Q optionally contain a hetero atom(s) and/or a substituent group(s), and be a divalent to quadrivalent aliphatic hydrocarbon group having 1 to 20 carbon atoms, a divalent to quadrivalent alicyclic hydrocarbon group having 3 to 20 carbon atoms, a divalent to quadrivalent aromatic hydrocarbon group having 5 to 15 carbon atoms or a combination of two or more of these groups. As such linking group Q, there is selected a linking group having a required number of carbon atoms to form the abovementioned cyclic structure. As a combination example, there may be employed an alkylene-arylene group with an alkylene group and an arylene group being bonded to each other.

Preferable examples of such linking group Q include divalent to quadrivalent linking groups represented by the following formulae (5-1), (5-2) and (5-3).

$$-Ar^1\left(O-X^1\right)_s O-Ar^2- \quad (5-1)$$

$$-R^5\left(O-X^2\right)_k O-R^6- \quad (5-2)$$

$-X^3-$ (5 - 3)

In the above formulae, each of $Ar^1$ and $Ar^2$ independently represents a divalent to quadrivalent aromatic hydrocarbon group having 5 to 15 carbon atoms. Such aromatic hydrocarbon group represented by each of $Ar^1$ and $Ar^2$ may contain a hetero atom(s) and/or a substituent group(s). As such a kind of aromatic hydrocarbon group, there may be employed an arylene group having 5 to 15 carbon atoms, an arenetriyl group having 5 to 15 carbon atoms and an

arenetetrayl group having 5 to 15 carbon atoms, each of which may contain a hetero atom(s) and/or a heterocyclic structure(s). As an arylene group (divalent), there may be employed a phenylene group and a naphthalenediyl group. As an arenetriyl group (trivalent), there may be employed a benzenetriyl group and a naphthalenetriyl group. As an arenetetrayl group (quadrivalent), there may be employed a benzenetetrayl group and a naphthalenetetrayl group. These aromatic hydrocarbon groups may also have substituent groups. Examples of such substituent groups include an alkyl group having 1 to 20 carbon atoms, an aryl group having 6 to 15 carbon atoms, halogen atoms, a nitro group, an amide group, a hydroxyl group, an ester group, an ether group and an aldehyde group.

As each of $Ar^1$ and $Ar^2$, preferred are a phenylene group, a naphthalenediyl group, a benzenetriyl group, a naphthalenetriyl group and a benzenetetrayl group, among which a phenylene group and a benzenetriyl group are more preferred.

Each of $R^5$ and $R^6$ may contain a hetero atom(s) and/or a substituent group(s), and independently represents a divalent to quadrivalent aliphatic hydrocarbon group having 1 to 20 carbon atoms, a divalent to quadrivalent alicyclic hydrocarbon group having 3 to 20 carbon atoms, or a combination thereof; or a combination of such combination and a divalent to quadrivalent aromatic hydrocarbon group having 5 to 15 carbon atoms. That is, it is impossible that each of $R^5$ and $R^6$ only comprises an aromatic hydrocarbon group.

Examples of the aliphatic hydrocarbon group include an alkylene group having 1 to 20 carbon atoms, an alkanetriyl group having 1 to 20 carbon atoms, and an alkanetetrayl group having 1 to 20 carbon atoms. Examples of the alkylene group include a methylene group, an ethylene group, a propylene group, a butylene group, a pentylene group, a hexylene group, a heptylene group, an octylene group, a nonylene group, a decylene group, a dodecylene group and a hexadecylene group. Examples of the alkanetriyl group include a methanetriyl group, an ethanetriyl group, a propanetriyl group, a butanetriyl group, a pentanetriyl group, a hexanetriyl group, a heptanetriyl group, an octanetriyl group, a nonanetriyl group, a decanetriyl group, a dodecanetriyl group and a hexadecanetriyl group. Examples of the alkanetetrayl group include a methanetetrayl group, an ethanetetrayl group, a propanetetrayl group, a butanetetrayl group, a pentanetetrayl group, a hexanetetrayl group, a heptanetetrayl group, an octanetetrayl group, a nonanetetrayl group, a decanetetrayl group, a dodecanetetrayl group and a hexadecanetetrayl group. These aliphatic hydrocarbon groups may also have substituent groups. Examples of such substituent groups include an alkyl group having 1 to 20 carbon atoms, an aryl group having 6 to 15 carbon atoms, halogen atoms, a nitro group, an amide group, a hydroxyl group, an ester group, an ether group and an aldehyde group.

Examples of the alicyclic hydrocarbon group include a cycloalkylene group having 3 to 20 carbon atoms, a cycloalkanetriyl group having 3 to 20 carbon atoms and a cycloalkanetetrayl group having 3 to 20 carbon atoms. Examples of the cycloalkylene group include a cyclopropylene group, a cyclobutylene group, a cyclopentylene group, a cyclohexylene group, a cycloheptylene group, a cyclooctylene group, a cyclononylene group, a cyclodecylene group, a cyclododecylene group and a cyclohexadecylene group. Examples of the cycloalkanetriyl group include a cyclopropanetriyl group, a cyclobutanetriyl group, a cyclopentanetriyl group, a cyclohexanetriyl group, a cycloheptanetriyl group, a cyclooctanetriyl group, a cyclononanetriyl group, a cyclodecanetriyl group, a cyclododecanetriyl group and a cyclohexadecanetriyl group. Examples of the cycloalkanetetrayl group include a cyclopropanetetrayl group, a cyclobutanetetrayl group, a cyclopentanetetrayl group, a cyclohexanetetrayl group, a cycloheptanetetrayl group, a cyclooctanetetrayl group, a cyclononanetetrayl group, a cyclodecanetetrayl group, a cyclododecanetetrayl group and a cyclohexadecanetetrayl group. These alicyclic hydrocarbon groups may also have substituent groups. Examples of such substituent groups include an alkyl group having 1 to 20 carbon atoms, an aryl group having 6 to 15 carbon atoms, halogen atoms, a nitro group, an amide group, a hydroxyl group, an ester group, an ether group and an aldehyde group.

Examples of the aromatic hydrocarbon group include an arylene group having 5 to 15 carbon atoms, an arenetriyl group having 5 to 15 carbon atoms, and an arenetetrayl group having 5 to 15 carbon atoms, each of which may contain a hetero atom(s) and have a heterocyclic structure(s). Examples of the arylene group include a phenylene group and a naphthalenediyl group. Examples of the arenetriyl group (trivalent) include a benzenetriyl group and a naphthalenetriyl group. Examples of the arenetetrayl group (quadrivalent) include a benzenetetrayl group and a naphthalenetetrayl group. These aromatic hydrocarbon groups may also have substituent groups. Examples of such substituent groups include an alkyl group having 1 to 20 carbon atoms, an aryl group having 6 to 15 carbon atoms, halogen atoms, a nitro group, an amide group, a hydroxyl group, an ester group, an ether group and an aldehyde group.

As $R^5$ and $R^6$, preferred are a methyl group, an ethyl group, a vinyl group, a phenyl group and an ether group, among which a methyl group, a phenyl group and an ether group are more preferred.

Each of $X^1$ and $X^2$ may contain a hetero atom(s) and a substituent group(s), and independently represents a divalent to quadrivalent aliphatic hydrocarbon group having 1 to 20 carbon atoms, a divalent to quadrivalent alicyclic hydrocarbon group having 3 to 20 carbon atoms, a divalent to quadrivalent aromatic hydrocarbon group having 5 to 15 carbon atoms or a combination of two or more of these groups.

Examples of such aliphatic hydrocarbon group, alicyclic hydrocarbon group and aromatic hydrocarbon group include those listed as the examples of $R^5$ and $R^6$. As $X^1$ and $X^2$, preferred are a methyl group, an ethyl group, a vinyl group and an ether group, among which a methyl group and an ether group are more preferred.

In the formulae (5-1) and (5-2), each of s and k represents an integer of 0 to 10, preferably 0 to 3, and more preferably 0 to 1. When each of s and k is greater than 10, it may be difficult to synthesize a cyclic carbodiimide compound, and the cost may significantly increase. In this way, it is preferred that each of s and k be selected from the range of 0 to 3. Here, when s or k is not smaller than 2, $X^1$ or $X^2$ as a repeating unit may differ from other $X^1$ or $X^2$.

In the formula (5-3), $X^3$ may contain a hetero atom(s) and a substituent group(s), and represents a divalent to quadrivalent aliphatic hydrocarbon group having 1 to 20 carbon atoms, a divalent to quadrivalent alicyclic hydrocarbon group having 3 to 20 carbon atoms, a divalent to quadrivalent aromatic hydrocarbon group having 5 to 15 carbon atoms or a combination of two or more of these groups.

Examples of such aliphatic hydrocarbon group, alicyclic hydrocarbon group and aromatic hydrocarbon group include those listed as the examples of $R^5$, $R^6$, $X^1$ and $X^2$. As $X^3$, preferred are a methyl group, an ethyl group, a vinyl group and an ether group, among which a methyl group and an ether group are more preferred.

Further, each of $Ar^1$, $Ar^2$, $R^5$, $R^6$, $X^1$, $X^2$ and $X^3$ may also contain a hetero atom(s) selected from O atom, N atom, S atom and P atom (provided that when a hetero atom contained is an N atom, this N atom shall exist as a nitro group and/or an amide group). Further, when Q is a divalent linking group, all of $Ar^1$, $Ar^2$, $R^5$, $R^6$, $X^1$, $X^2$ and $X^3$ are divalent groups. When Q is a trivalent linking group, one of $Ar^1$, $Ar^2$, $R^5$, $R^6$, $X^1$, $X^2$ and $X^3$ is a trivalent group. When Q is a quadrivalent linking group, either one of $Ar^1$, $Ar^2$, $R^5$, $R^6$, $X^1$, $X^2$ and $X^3$ is a quadrivalent group, or two of them are trivalent groups.

As a structure where Q is a trivalent or quadrivalent linking group, and bonded to an other cyclic structure(s) having a carbodiimide group(s), there can be listed a model where not less than two cyclic structures represented by the formula (5) are bonded together through a shared part(s) each having 1 to 15 carbon atoms, preferably 1 to 12 carbon atoms, such shared part(s) being selected from, for example, a spiro ring structure, a single bond, an alkylene group having 1 to 10 carbon atoms, an aromatic ring structure having 6 to 10 carbon atoms and a cycloalkane ring structure having 4 to 12 carbon atoms. Examples of such model include those represented by the following formulae (6-1) to (6-4).

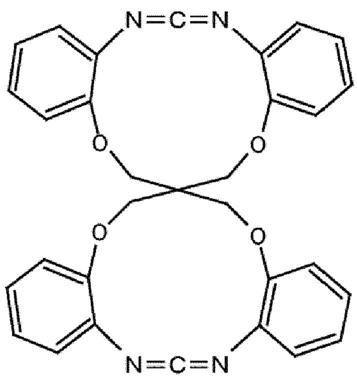

(6 − 1)

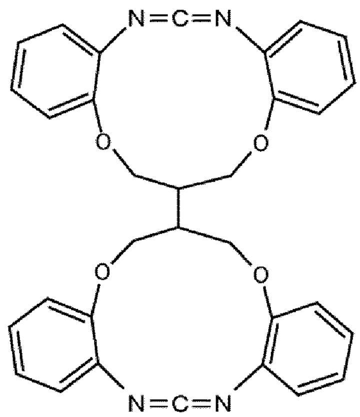

(6 − 2)

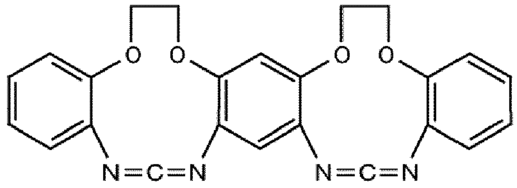

(6 − 3)

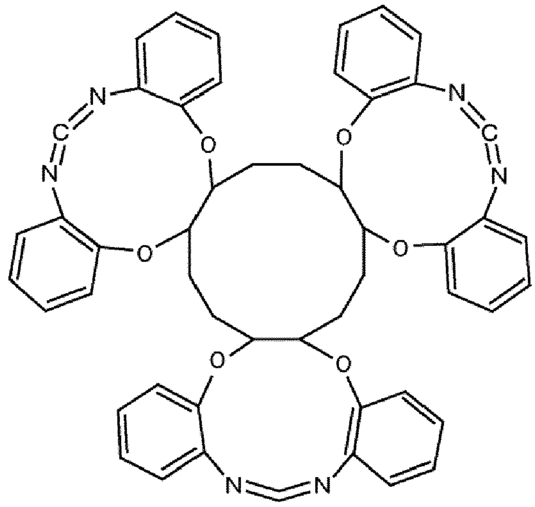

(6 − 4)

The cyclic carbodiimide compound (C) is in an amount of 2 to 50 parts by mass, preferably 5 to 30 parts by mass, particularly preferably 10 to 30 parts by mass, per a total of 100 parts by mass of the epoxy resin (A) and the aromatic amine-based curing agent (B).

(D) Inorganic filler

If necessary, an inorganic filler is added to reduce the thermal expansion rate of a heat-curable resin composition, and improve the moisture resistance reliability thereof. Examples of such inorganic filler include silicas such as a molten silica, a crystalline silica and cristobalite; alumina; silicon nitride; aluminum nitride; boron nitride; titanium oxide; glass fibers; and magnesium oxide. The shapes and average particle diameters of these inorganic fillers can be selected according to the intended use. Particularly, preferred are a spherical alumina, a spherical molten silica, glass fibers and the like.

It is preferred that the inorganic filler be added in an amount of 20 to 1,500 parts by mass, more preferably 50 to 1,000 parts by mass, per a total of 100 parts by mass of the components (A) to (C).

(E) Other additives

The heat-curable epoxy resin composition of the invention can be obtained by combining given amounts of the above components (A) to (C), and (D) if necessary. However, a component (E) as an other additive(s) may also be added, provided that the purposes and effects of the invention will not be impaired. Examples of such additives include a curing accelerator, a mold release agent, a flame retardant, an ion trapping agent, an antioxidant, an adhesion imparting agent, a low stress agent and a coloring agent.

A curing accelerator is added to promote the curing reaction between the liquid epoxy resin and the aromatic amine-based curing agent. There are no particular restrictions on such curing accelerator, as long as it is capable of promoting the curing reaction. Examples of such curing accelerator include phosphorous compounds such as triphenylphosphine, tributylphosphine, tri (p-methylphenyl) phosphine, tri (nonylphenyl) phosphine, triphenylphosphine·triphenylborane and tetraphenylphosphine·tetraphenylborate; tertiary amine compounds such as triethylamine, benzyldimethylamine, $\alpha$-methylbenzyldimethylamine and 1,8-diazabicyclo [5.4.0] undecene-7; and imidazole compounds such as 2-methylimidazole, 2-phenylimidazole and 2-phenyl-4-methylimidazole.

A mold release agent is added to improve a mold releasability from a mold. Examples of such mold release agent include all the known mold release agents such as a carnauba wax, a rice wax, a candelilla wax, polyethylene, oxidized polyethylene, polypropylene, a montanic acid, a montan wax (i.e. an ester compound of a montanic acid; and a saturated alcohol, 2-(2-hydroxyethylamino) ethanol, ethylene glycol or glycerin), a stearic acid, a stearic acid ester and a stearic acid amide.

A flame retardant is added to impart a flame retardant property. There are no particular restrictions on such flame retardant, and all the known flame retardants may be used. Examples of such flame retardant include a phosphazene compound, a silicone compound, a zinc molybdate-supported talc, a zinc molybdate-supported zinc oxide, aluminum hydroxide, magnesium hydroxide and molybdenum oxide.

An ion trapping agent is added to trap the ion impurities contained in the resin composition, and avoid thermal

degradation and moisture absorption degradation. There are no particular restrictions on such ion trapping agent, and all the known ion trapping agents may be used. Examples of such ion trapping agents include hydrotalcites, a bismuth hydroxide compound and rare-earth oxides.

Although the amount of the component (E) added varies depending on the intended use of the heat-curable epoxy resin composition, the component (E) is normally added in an amount of not larger than 10% by mass with respect to the whole heat-curable epoxy resin composition.

Method for preparing mixture

The heat-curable epoxy resin composition of the invention can be prepared by the following method. For example, a mixture of the components (A) to (C) is obtained by simultaneously or separately mixing, stirring, melting and/or dispersing the epoxy resin (A), the aromatic amine-based curing agent (B) and the cyclic carbodiimide compound (C) while performing a heating treatment if necessary. Further, there is also a method of obtaining a mixture of the components (A) to (D), by adding the inorganic filler (D) to the mixture of the components (A) to (C) so as to stir, melt and/or disperse the same therein. Also, depending on the intended use, at least one of the additives (E) which are the curing accelerator, the mold release agent, the flame retardant and the ion trapping agent may be added to and mixed with the mixture of the components (A) to (C) or the mixture of the components (A) to (D). Each of the components (A) to (E) may comprise only one kind thereof, or two or more kinds thereof.

There are no particular restrictions on the method for preparing the mixtures, and a device(s) for performing mixing, stirring and dispersion. Specific examples of such device(s) include a kneader equipped with a stirring and heating devices, a twin-roll mill, a triple-roll mill, a ball mill, a planetary mixer and a mass-colloider. These devices may also be appropriately used in combination.

Working example

The present invention is described in greater detail hereunder with reference to working and comparative examples. However, the invention shall not be limited to the following working examples.

In working examples 1 to 10; and comparative examples 1 to 6, a heat-curable epoxy resin composition was prepared by combining the following components at the ratios shown in Table 1. Here, in Table 1, the amount of each component is expressed as "part by mass." An equivalent refers to an equivalent of all the amino groups in the component (B) with respect to one equivalent of all the epoxy groups in the component (A).

(A) Liquid epoxy resin

(1) Epoxy resin (A1): Bisphenol F-type epoxy resin (YDF-8170 by Mitsubishi Chemical Corporation)
(2) Epoxy resin (A2): Naphthalene-type epoxy resin (HP4032D by DIC Corporation)
(3) Epoxy resin (A3): Aminophenol-type trifunctional epoxy resin (jER630 by Mitsubishi Chemical Corporation)

(B) Amine-based curing agent

(1) Aromatic amine-based curing agent (B1): 3,3'-diethyl-4,4'-diaminodiphenylmethane (KAYAHARD AA by Nippon Kayaku Co., Ltd.)
(2) Aromatic amine-based curing agent (B2): Diethyltoluenediamine (ETHACURE-100 by Albemarle Corporation)
(3) Alicyclic amine curing agent (B3): 1,3-bisaminomethylcyclohexane (1,3-BAC by MITSUBISHI GAS CHEMICAL COMPANY, INC.)

(C) Carbodiimide compound

(1) Cyclic carbodiimide compound (C1): TCC (by TEIJIN LIMITED; carbodiimide equivalent 256.4)
(2) Non-cyclic carbodiimide compound (C2): V-05 (by Nisshinbo Holdings Inc.)

(D) Inorganic filler

(1) Inorganic filler (D1): RS-8225H/53C (molten silica having an average particle diameter of 14 μm by Tatsumori Ltd.)

Evaluation

Each composition obtained was tested through the following evaluation methods, and the results thereof are shown in Table 1.

Condition for preparing cured product sample

With regard to working examples 1 to 10; and comparative examples 1 to 6, since the heat-curable epoxy resin compositions obtained in these examples were liquid at 25°C before curing, they were molded at 120°C for an hour, and then at 165°C for another two hours. In this way, there were obtained specimens to be subjected to the following tests.

(1) Measurement of glass-transition temperature

The cured product obtained in each of the working and comparative examples was processed into a specimen of a size of 5 × 5 × 15 mm, followed by setting such specimen in a thermal dilatometer TMA 8140 C (by Rigaku Corporation). Further, a temperature program was set to a rate of temperature increase of 5°C/min, and it was also arranged in a way such that a constant load of 19.6 mN would be applied to the specimen. A change in size of the specimen was then measured under these conditions, as the temperature rose from 25°C to 300°C. A correlation between such change in size and the temperature was later plotted on a graph. Based on this graph showing the correlation between the change in size and the temperature, the glass-transition temperatures in the working and comparative examples were calculated through the following method for determining the glass-transition temperature, and the glass-transition temperatures obtained are shown in Table 1.

Method for determining glass-transition temperature

In FIG.1, $T_1$ and $T_2$ represent two arbitrary temperatures that are not higher than the temperature at the inflection point and by which a tangent line to the size change-temperature curve can be drawn; whereas $T_1'$ and $T_2'$ represent two arbitrary temperatures that are not lower than the temperature at the inflection point and by which a similar tangent line can be drawn. $D_1$ and $D_2$ individually represent a change in size at $T_1$ and a change in size at $T_2$; whereas $D_1'$ and $D_2'$ individually represent a change in size at $T_1'$ and a change in size at $T_2'$. The glass-transition temperature (Tg) is then defined as the temperature at the point of intersection between a straight line connecting points ($T_1$, $D_1$) and ($T_2$, $D_2$) and a straight line connecting points ($T_1'$, $D_1'$) and ($T_2'$, $D_2'$).

(2) Bending strength

A bending strength of the cured product prepared under the abovementioned curing conditions was measured in accordance with JIS K 6911:2006.

(3) Water absorption rate

A disk having a diameter of 50 mm and a thickness of 3 mm was produced under the aforementioned curing conditions. An analytical balance (METTLER AT201 by Mettler-Toledo International Inc.) was used to measure the initial weight of the disk produced, followed by placing the disk in a pressure cooker so as to expose the same to a saturated water vapor of $2.03 \times 10^5$ Pa at 121°C for 96 hours. Later, the analytical balance (METTLER AT201 by Mettler-Toledo International Inc.) was again used to weigh the disk that had absorbed moisture. A water absorption rate (%) was calculated using the following formula.

$$\text{Water absorption rate (\%)} = \frac{(\text{Weight after moisture absorption [g]} - \text{Initial weight [g]})}{\text{Initial weight [g]}} \times 100$$

(4) Rate of reduction in weight after heated at 200°C

A specimen of a size of 10×100×4 mm was obtained by performing molding at 120°C for an hour, and then at 165°C for another two hours. The analytical balance (METTLER AT201 by Mettler-Toledo International Inc.) was used to measure the initial weight of the specimen obtained, followed by storing this specimen in an oven of 200°C for 500 hours. Later, the analytical balance (METTLER AT201 by Mettler-Toledo International Inc.) was again used to weigh such specimen that had been heated at 200°C. The following formula was used to calculate a rate (%) of reduction in weight after heating at 200°C.

$$\text{Rate of reduction in weight after heated } 200^{\circ}\text{C (\%)} = \frac{(\text{Weight after heated at } 200^{\circ}\text{C [g]} - \text{Initial weight [g]})}{\text{Initial weight [g]}} \times 100$$

Table 1

| | | Working example | | | | | | | | | | Comparative example | | | | | |
|---|---|---|---|---|---|---|---|---|---|---|---|---|---|---|---|---|---|
| | | 1 | 2 | 3 | 4 | 5 | 6 | 7 | 8 | 9 | 10 | 1 | 2 | 3 | 4 | 5 | 6 |
| Equivalent | | 1.0 | 1.0 | 1.0 | 1.0 | 1.0 | 1.0 | 1.0 | 1.0 | 1.0 | 1.0 | 1.0 | 1.0 | 0.0 | 0.5 | 2.0 | 1.0 |
| Epoxy resin(A1) | | 35.2 | 35.2 | 35.2 | | | | | 35.2 | | | 75.6 | 81.8 | 100 | 69.2 | 90 | 35.2 |
| Epoxy resin(A2) | | | | | 35 | 35 | | | | 35 | | | | | | | |
| Epoxy resin(A3) | | 35.2 | 35.2 | 35.2 | 35 | 35 | 61.2 | 61.2 | 35.2 | 35 | 61.2 | | | | | | 35.2 |
| Aromatic amine-based curing agent(B1) | | 14.8 | 14.8 | 14.8 | 15 | 15 | 38.8 | 38.8 | 14.8 | 15 | 38.8 | 12.2 | | | 30.8 | 10 | 14.8 |
| Aromatic amine-based curing agent(B2) | | 14.8 | 14.8 | 14.8 | 15 | 15 | | | 14.8 | 15 | | 12.2 | | | | | 14.8 |
| Alicyclic amine-based curing agent(B3) | | | | | | | | | | | | | 18.2 | | | | |
| Cyclic carbodiimide compound (C1) | | 2 | 10 | 30 | 10 | 30 | 10 | 30 | 10 | 10 | 10 | | 10 | 10 | 10 | 10 | |
| Non-cyclic carbodiimide compound(C2) | | | | | | | | | | | | | | | | | 10 |
| Molten silica(D1) | | | | | | | | | 257 | 257 | 257 | | | | | | |
| Tg | °C | 180 | 210 | 230 | 220 | 240 | 170 | 200 | 210 | 220 | 200 | 140 | 110 | Uncured | 120 | 130 | 160 |
| Bending strength | MPa | 100 | 100 | 110 | 100 | 100 | 90 | 100 | 150 | 150 | 150 | 70 | 60 | | 50 | 60 | 50 |
| Water absorption rate | % | 3.3 | 3.1 | 2.8 | 3 | 2.5 | 3.5 | 3.2 | 0.9 | 1.1 | 1.3 | 4.1 | 4.5 | | 4.7 | 3.5 | 5.6 |
| Rate of reduction in weight after heated 200°C | % | -4.1 | -3.6 | -2.9 | -3.3 | -2.7 | -3.3 | -2.7 | -2.1 | -1.7 | -1.5 | -6.1 | -7.4 | | Unmeasurable | -5.6 | -7.8 |

## Claims

**1.** A heat-curable epoxy resin composition comprising:

(A) a liquid epoxy resin;
(B) an aromatic amine-based curing agent; and
(C) a cyclic carbodiimide compound, wherein

the aromatic amine-based curing agent (B) is in an amount at which a total of all amino groups in the aromatic amine-based curing agent (B) is in an amount of 0.7 to 1.5 equivalents per one equivalent of all epoxy groups in the liquid epoxy resin (A), and the cyclic carbodiimide compound (C) is in an amount of 2 to 50 parts by mass per a total of 100 parts by mass of the liquid epoxy resin (A) and the aromatic amine-based curing agent (B).

**2.** The heat-curable epoxy resin composition according to claim 1, wherein the component (B) comprises at least one of the aromatic amine-based curing agents represented by the following formulae (1), (2), (3) and (4)

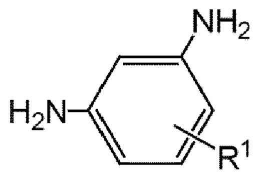

(1)

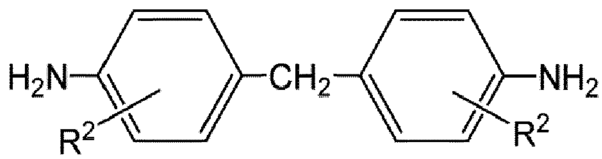

(2)

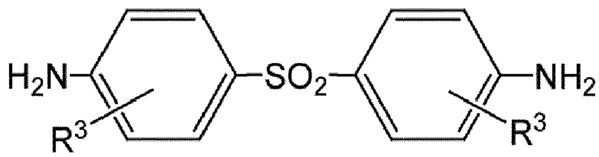

(3)

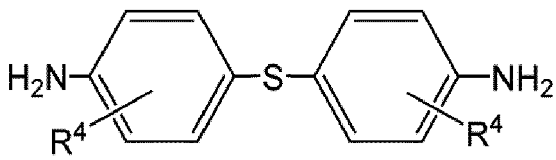

(4)

wherein each of $R^1$ to $R^4$ represents a hydrogen atom; an identical or different monovalent hydrocarbon group having 1 to 6 carbon atoms; $CH_3S$-; or $CH_3CH_2S$-.

**3.** The heat-curable epoxy resin composition according to claim 1 or claim 2, further comprising an inorganic filler (D).

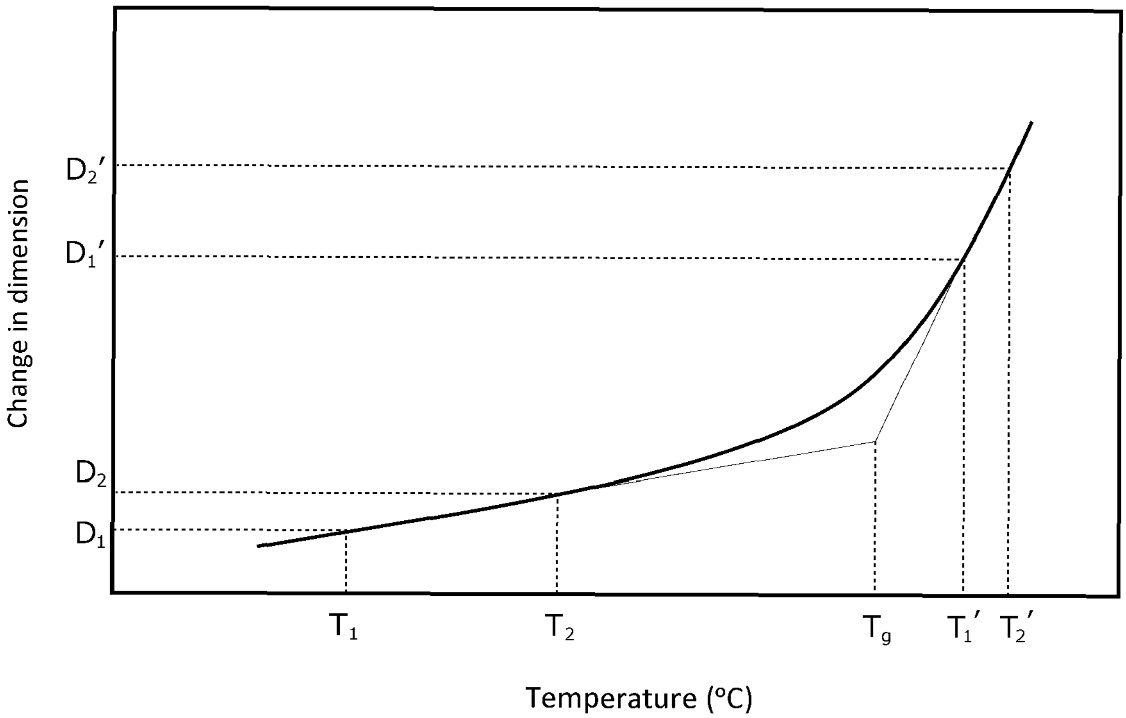

Change in dimension
D2′
D1′
D2
D1
T1
T2
Tg
T1′
T2′
Temperature (°C)

Europäisches Patentamt
European Patent Office
Office européen des brevets

# EUROPEAN SEARCH REPORT

Application Number
EP 17 18 7232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 3 127 933 A1 (SHIN-ETSU CHEMICAL CO LTD [JP]) 8 February 2017 (2017-02-08)<br>* paragraphs [0001], [0008], [0060]; claims 1-4; examples 5,13; table 2 *<br>----- | 1-3 | INV.<br>C08G59/40<br>C08G59/50 |
| X | WO 2016/039486 A1 (TEIJIN LTD [JP]) 17 March 2016 (2016-03-17)<br>* claim 1; examples 10-12.14 *<br>----- | 1-3 | |
| A | US 2004/192810 A1 (SUMITA KAZUAKI [JP] ET AL) 30 September 2004 (2004-09-30)<br>* examples 1-6; table 1 *<br>----- | 1-3 | |

TECHNICAL FIELDS SEARCHED (IPC)

C08G

The present search report has been drawn up for all claims

1

| Place of search | Date of completion of the search | Examiner |
|---|---|---|
| The Hague | 14 November 2017 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 18 7232

This annex lists the patent family members relating to the patent documents cited in the above-mentioned European search report. The members are as contained in the European Patent Office EDP file on
The European Patent Office is in no way liable for these particulars which are merely given for the purpose of information.

14-11-2017

| Patent document cited in search report | Publication date | Patent family member(s) | Publication date |
|---|---|---|---|
| EP 3127933 A1 | 08-02-2017 | CN 106432692 A | 22-02-2017 |
| | | EP 3127933 A1 | 08-02-2017 |
| | | JP 2017031402 A | 09-02-2017 |
| | | KR 20170016797 A | 14-02-2017 |
| | | TW 201726801 A | 01-08-2017 |
| | | US 2017037238 A1 | 09-02-2017 |
| WO 2016039486 A1 | 17-03-2016 | CN 106715578 A | 24-05-2017 |
| | | EP 3192834 A1 | 19-07-2017 |
| | | JP WO2016039486 A1 | 22-06-2017 |
| | | KR 20170057248 A | 24-05-2017 |
| | | PH 12017500465 A1 | 31-07-2017 |
| | | SG 11201701852V A | 27-04-2017 |
| | | TW 201623428 A | 01-07-2016 |
| | | US 2017253693 A1 | 07-09-2017 |
| | | WO 2016039486 A1 | 17-03-2016 |
| US 2004192810 A1 | 30-09-2004 | JP 3997422 B2 | 24-10-2007 |
| | | JP 2004292725 A | 21-10-2004 |
| | | US 2004192810 A1 | 30-09-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014080455 A
- JP 2004168894 A
- JP 2010285557 A